# EUROPEAN PATENT APPLICATION

(11) **EP 2 444 676 A2**
(43) Date of publication of application: **25.04.2012**
(21) Application number: 11008444.9
(22) Date of filing: 20.10.2011
(51) Int. Cl.: F15B 7/00, B29C 33/24

(54) **Injection molding machine and hydraulic actuator**

(30) Priority: 20.10.2010 JP 2010235920; 21.09.2011 JP 2011206448
(71) Applicant: Sumitomo Heavy Industries, LTD., Tokyo 141-6025 (JP)
(72) Inventor: Terada, Shinji, Yokosuka-shi Kanagawa, 237-8555 (JP)
(74) Representative: Wagner, Karl H.

(57) **Abstract**

Hydraulic actuators 100BL, 100BR move an injection device 20 up and down. Each comprises a hydraulic cylinder 1BL, 1BR having a rod side oil chamber 1BLc, 1BRc and a head side oil chamber 1BLb, 1BRb isolated by a piston 1BLa, 1BRa and receiving a self weight pressure of the injection device 20 through use of oil in the head side oil chamber 1BLb, 1BRb, the dual directional hydraulic pump, one port of which is fluidly connected to the rod side oil chamber 1BLc, 1BRc, the other of witch is fluidly connected to the head side oil chamber 1BLb, 1BRb, and the electric motor for driving the dual directional hydraulic pump, wherein the electric motor drives the dual directional hydraulic pump against pressure of the oil in the head side oil chamber 1BLb, 1BRb which receives the self weight pressure of the injection device 20.

## Description

### BACKGROUND OF THE INVENTION

### 1. Field of the Invention

The present invention relates to a hydraulic actuator which moves a driven part up and down through use of hydraulic pressure and an injection molding machine provided with such a hydraulic actuator. In particular, the present invention relates to a hydraulic actuator with a single-rod hydraulic cylinder and an injection molding machine provided with such a hydraulic actuator. The single-rod hydraulic cylinder has a rod side oil chamber and a head side oil chamber which are isolated by a cylinder inner wall and a piston, and receives the driven part's own weight pressure via oil in the rod side oil chamber or the head side oil chamber.

### 2. Description of the Related Art

Conventionally, a fluid pressure type drive device provided with a single-rod hydraulic cylinder is known (see JP1999-287206A for example). The single-rod hydraulic cylinder moves a driven part up and down through use of pressure of oil discharged from a hydraulic pump, and receives the driven part's own weight pressure via hydraulic oil in its rod side oil chamber.

This fluid pressure type drive device has an electromagnetic flow regulating valve located at a hydraulic oil return path fluidly connected to the rod side oil chamber of the hydraulic cylinder. The valve restricts flow rate of hydraulic oil flowing out of the rod side oil chamber so that downward extension rate of the rod does not become too high.

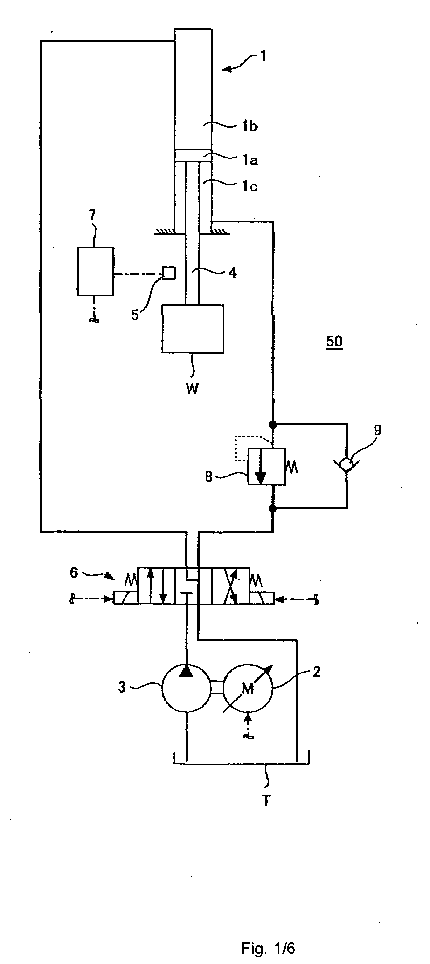

FIG. 1 is a schematic diagram of the configuration of the conventional fluid pressure actuator as described in JP1999-287206A. A fluid pressure actuator 50 is comprised of a hydraulic cylinder 1 as an immovable member, an electric motor 2, a hydraulic pump 3 rotationally driven by the electric motor 2, a rod 4 as a movable member, a position sensor 5 for detecting a position of the rod 4, a flow control valve 6, a control device 7, a counter balance valve 8, and a check valve 9. The hydraulic cylinder 1 has a head side oil chamber 1b and a rod side oil chamber 1c isolated by a piston 1a and a cylinder inner wall. A suction port of the hydraulic pump 3 is fluidly connected to a hydraulic tank T and a discharge port of the hydraulic pump 3 is fluidly connected to the head side oil chamber 1b of the hydraulic cylinder 1. The rod 4 extends vertically downward from the piston 1a and holds a driven part W. The flow control valve 6 switches a flow direction of hydraulic oil discharged from the hydraulic pump 3 and controls flow rate of the hydraulic oil flowing into the hydraulic cylinder 1. The control device 7 controls the electric motor 2 and the flow control valve 6 based on an output of the position sensor 5. The counter balance valve 8 fluidly connects the rod side oil chamber 1c and the flow control valve 6 if pressure in the rod side oil chamber 1c is higher than or equal to a predetermined value, and fluidly disconnects the rod side oil chamber 1c and the flow control valve 6 if pressure in the rod side oil chamber 1c is lower than the predetermined value. The check valve 9 prevents a flow from the rod side oil chamber 1c to the flow control valve 6 and allows a flow from the flow control valve 6 to the rod side oil chamber 1c.

The control device 7 calculates a flow rate of hydraulic oil flowing into the head side oil chamber 1b required for moving the driven part W downward at a preferred speed. Then, the control device 7 outputs a control signal to the electric motor 2 and the flow control valve 6 according to the calculated flow rate. In this way, the control device 7 moves the driven part W downward at the preferred speed while controlling flow rate of hydraulic oil flowing into the head side oil chamber 1b.

However, the conventional fluid pressure actuator 50 as described in JP1999-287206A always has to keep on applying a force against a free fall by gravity of the driven part W in the hydraulic oil return path through use of an electromagnetic flow regulating valve, the counter balance valve 8, or the like, in order to move the driven part W downward at an adequate speed. This reduces energy efficiency.

### SUMMARY OF THE INVENTION

In consideration of the above, the present invention is intended to provide a hydraulic actuator which moves a driven part up and down more efficiently and an injection molding machine provided with such a hydraulic actuator.

To meet the above objective, an injection molding machine according to an embodiment of the present invention comprises a hydraulic actuator configured to move a driven part up and down, a single-rod cylinder including a rod side oil chamber and a head side oil chamber isolated by a piston, and configured to receive at least part of a self weight pressure of the driven part through use of oil in the rod side oil chamber or the head side oil chamber, a dual directional hydraulic pump, one port of which is fluidly connected to the rod side oil chamber, the other of which is fluidly connected to the head side oil chamber, and a motor configured to drive the dual directional hydraulic pump, wherein the motor drives the dual directional hydraulic pump against pressure of the oil in the rod side oil chamber or the head side oil chamber which receives at least part of the self weight pressure of the driven part.

A hydraulic actuator according to an embodiment of the present invention is a hydraulic actuator for moving a driven part up and down, comprising a single-rod cylinder including a rod side oil chamber and a head side oil chamber isolated by a piston, and configured to receive at least part of a self weight pressure of the driven part through use of oil in the rod side oil chamber or the head side oil chamber, a dual directional hydraulic pump, one port of which is fluidly connected to the rod side oil chamber, the other of witch is fluidly connected to the head side oil chamber, and a motor configured to drive the dual directional hydraulic pump, wherein the motor drives the dual directional hydraulic pump against pressure of the oil in the rod side oil chamber or the head side oil chamber which receives at least part of the self weight pressure of the driven part.

According to the above, the present invention can provide a hydraulic actuator which moves a driven part up and down more efficiently and an injection molding machine provided with such a hydraulic actuator.

### BRIEF DESCRIPTION OF THE DRAWINGS

FIG. 1 is a schematic view illustrating a configuration of a conventional fluid pressure actuator.
FIG. 2 is a schematic view illustrating a configuration example of a hydraulic actuator according to a first embodiment of the present invention.
FIG. 3 illustrates an operation of the hydraulic actuator when moving a driven part downward.
FIG. 4 illustrates an operation of the hydraulic actuator when moving a driven part upward.
FIG. 5 is a schematic view illustrating a configuration example of a hydraulic actuator according to a second embodiment of the present invention.
FIG. 6 is a diagram illustrating a configuration example of an injection molding machine provided with a hydraulic actuator according to an embodiment of the present invention.

### DETAILED DESCRIPTION OF THE PREFERRED EMBODIMENT

With reference to the figures, embodiments are described in the following.

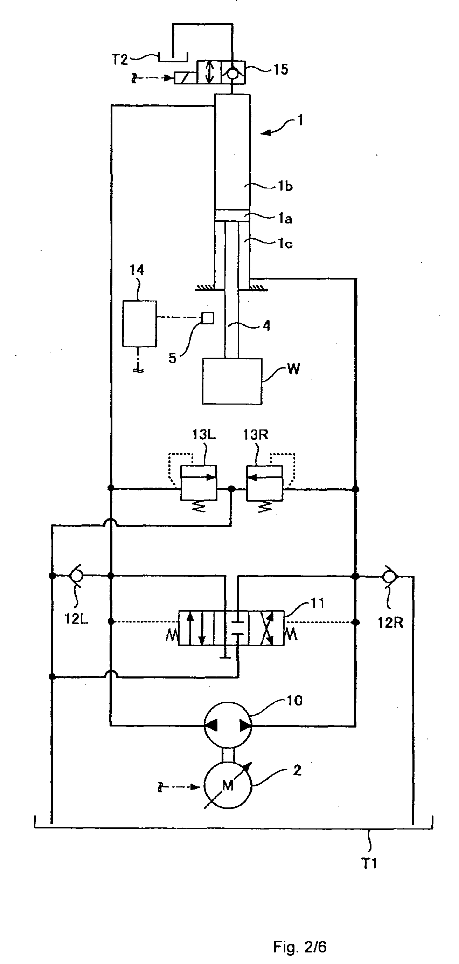

FIG. 2 is a schematic view illustrating a configuration example of a hydraulic actuator 100 according to an embodiment of the present invention. In FIG. 2, the components that are the same as in the conventional fluid pressure actuator have the same reference numerals.

The hydraulic actuator 100 is applicable to a vertical injection molding machine, a hydraulic press machine, a hydraulic lifting and lowering device, or the like. The hydraulic actuator 100 employs a closed hydraulic circuit drive system. The hydraulic actuator 100 mainly includes a hydraulic cylinder 1 which has a head side oil chamber 1b and a rod side oil chamber 1c isolated by a piston 1a and a cylinder inner wall, an electric motor 2, a rod 4 which extends vertically downward from the piston 1a and holds a driven part W, a position sensor 5 for detecting a position of the rod 4, a dual directional hydraulic pump 10, a flushing valve 11, check valves 12L, 12R, relief valves 13L, 13R, a control device 14, and a prefill valve 15.

The dual directional hydraulic pump 10 is rotationally driven by the electric motor 2. A first port of the pump 10 is fluidly connected to the head side oil chamber 1b of the hydraulic cylinder 1, and a second port of the pump 10 is fluidly connected to the rod side oil chamber 1c of the hydraulic cylinder 1.

The flushing valve 11 is a spool valve with 3 positions and 4 ports. The flushing valve 11 fluidly connects a tank T1 and either one of the following two oil passages whose pressure is the lower of the two, an oil passage connecting the head side oil chamber 1b and the first port, or an oil passage connecting the rod side oil chamber 1c and the second port.

The check valve 12L allows hydraulic oil to flow from the tank T1 to the oil passage connecting the head side oil chamber 1b and the first port, if pressure in the oil passage has fallen below the pressure in the tank T1.

The check valve 12R allows hydraulic oil to flow from the tank T1 to the oil passage connecting the rod side oil chamber 1c to the second port, if pressure in the oil passage has fallen below the pressure in the tank T1.

The relief valve 13L allows hydraulic oil in the oil passage connecting the head side oil chamber 1b and the first port to flow to the tank T1, if pressure in the oil passage has become higher than or equal to a predetermined pressure.

The relief valve 13R allows hydraulic oil in the oil passage connecting the rod side oil chamber 1c and the second port to flow to the tank T1, if pressure in the oil passage has become higher than or equal to a predetermined pressure.

The control device 14 controls a variety of components of the hydraulic actuator 100. For example, the control device 14 can be a computer having a CPU (Central Processing Unit), a RAM (Random Access Memory), a ROM (Read Only Memory), or the like. The control device 14 causes the CPU to execute a variety of calculations, and controls the electric motor 2 and the prefill valve 15.

Specifically, the control device 14 calculates a difference *ΔD* (cm) between a current position (height) of the driven part W detected by the position sensor 5 and a target position (height) of the driven part W entered by an operator through an input device (not shown), when lowering the driven part W. Then, the control device 14 decides a target descent velocity *V* (cm/second) of the driven part W according to the difference *ΔD* (cm).

Then, the control device 14 calculates a target flow rate *Q* (cm³/second) by multiplying the decided target descent velocity *V* (cm/second) of the driven part W by a cross sectional area *A* (cm²) of the rod side oil chamber 1c.

Then, the control device 14 calculates a target rotational speed *N* (rps: revolution per second) by dividing the target flow rate *Q* (cm³/second) by a discharge rate per revolution *q* (cm³/revolution) of the dual directional hydraulic pump 10. Then, the control device 14 outputs a control signal (a motor rotation command value) corresponding to the calculated target rotational speed *N* (rps) to the electric motor 2. Similarly, in the case of lifting the driven part W, the control device 14 decides a target ascent velocity (cm/second), and then calculates a control signal to be output to the electric motor 2 based on the cross sectional area *A* (cm²) of the rod side oil chamber 1c.

Also, if the control device 14 causes the dual directional hydraulic pump 10 to rotate so that the pump 10 can suck out hydraulic oil from the rod side oil chamber 1c and discharge hydraulic oil toward the head side oil chamber 1b, the control device 14 outputs a predetermined control signal to the prefill valve 15 so that the prefill valve 15 can switch its position to a first predefined position as described below. Thus, the control device 14 can replenish hydraulic oil by feeding hydraulic oil from a tank T2 into the head side oil chamber 1b, if pressure in the head side oil chamber 1b has fallen below the pressure in the tank T2. The tank T2 may be integrated into the tank T1 or may be a separate body.

In contrast, if the control device 14 causes the dual directional hydraulic pump 10 to rotate so that the pump 10 can suck out hydraulic oil from the head side oil chamber 1b and discharge hydraulic oil toward the rod side oil chamber 1c, the control device 14 outputs a predetermined control signal to the prefill valve 15 so that the prefill valve 15 can switch its position to a second predefined position. Thus, the control device 14 can discharge the hydraulic oil in the head side oil chamber 1b to the tank T2.

The prefill valve 15 is a spool valve with 2 positions and 2 ports. The prefill valve 15 controls a flow of hydraulic oil between the tank T2 and the head side oil chamber 1b by switching its position in response to a control signal from the control device 14.

If pressure in the head side oil chamber 1b has fallen below the pressure in the tank T2, the first predefined position of the prefill valve 15 (right side in the figure) enables hydraulic oil to be fed and replenished from the tank T2 to the head side oil chamber 1b.

The second predefined position of the prefill valve 14 (left side in the figure) connects the head side oil chamber 1b and the tank T2, and enables hydraulic oil to be communicated between the head side oil chamber 1b and the tank T2.

The prefill valve 15 may be a pilot check valve with the same functions each of the first predefined position and the second predefined position have.

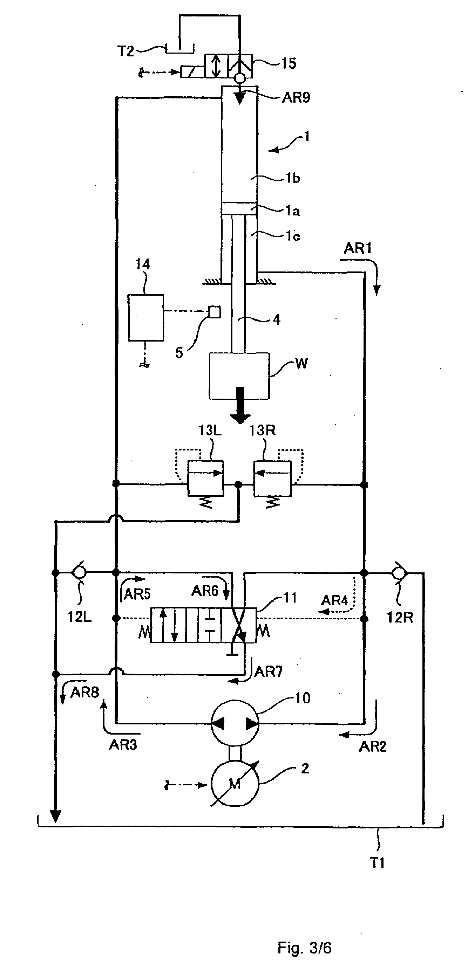

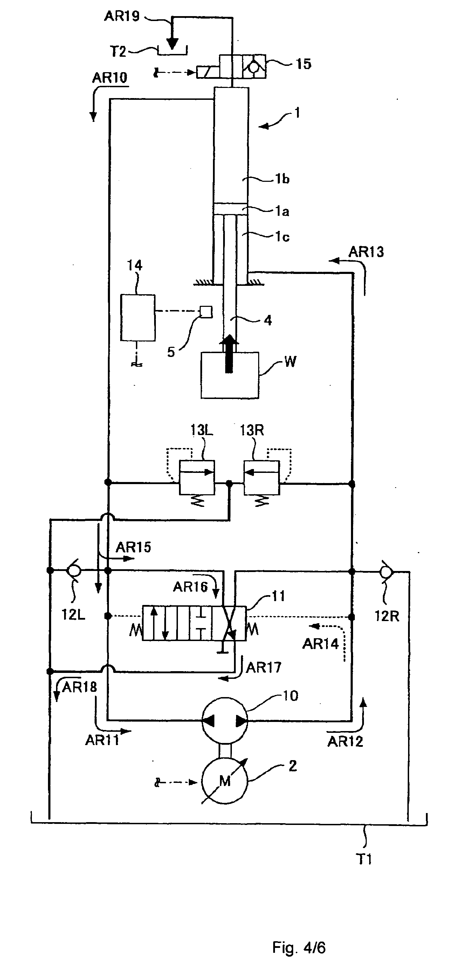

Next, referring to FIGS. 3 and 4, an operation of the hydraulic actuator 100 in the case of moving the driven part W up and down will be described.

Firstly, referring to FIG. 3, an operation of the hydraulic actuator 100 in the case of lowering the driven part W will be described.

Once a target position (height) of the driven part W is entered by an operator through an input device (not shown), the control device 14 detects a current position (height) of the driven part W based on an output of the position sensor 5. Then, the control device 14 calculates the difference (cm) between the current position (height) and the target position (height), and decides a target descent velocity (cm/second) according to the difference.

Then, the control device 14 calculates a target flow rate *Q* (cm³/second) by multiplying the decided target descent velocity *V* (cm/second) of the driven part W by a cross sectional area *A* (cm²) of the rod side oil chamber 1c. Then the control device 14 calculates a target rotational speed *N* (rps) by dividing the target flow rate *Q* (cm3/second)) by a discharge rate per revolution *q* (cm³/revolution) of the dual directional hydraulic pump 10. Then the control device 14 outputs a control signal (a motor rotation command value) corresponding to the calculated target rotational speed *N* (rps) to the electric motor 2.

The electric motor 2 rotates at a speed corresponding to the motor rotation command value, and drives the dual directional hydraulic pump 10 so that the pump 10 can suck out hydraulic oil from the rod side oil chamber 1c (see arrows AR1 and AR2), and the pump 10 can discharge the sucked-out hydraulic oil toward the head side oil chamber 1b (see arrow AR3).

In this case, pressure in the rod side oil chamber 1c (pressure in the oil passage connecting the suction port of the pump 10 and the rod side oil chamber 1c) is higher than a predetermined value due to the driven part's own weight pressure. Thus, the flushing valve 11 is moved to the left side of the FIG. 3 (see arrow AR4), and fluidly connects the tank T1 and the oil passage connecting the discharge port of the pump 10 and the head side oil chamber 1b.

Thus, if a distance between the dual directional hydraulic pump 10 and the head side oil chamber 1b is large and thus pressure loss in between is large, hydraulic oil discharged from the dual directional hydraulic pump 10 flows to the tank T1 through the flushing valve 11 without flowing to the head side oil chamber 1b (see arrows AR5 to AR8).

In contrast, pressure in the head side oil chamber 1b decreases because supply of hydraulic oil from the pump 10 has been disrupted. Thus, the head side oil chamber 1b is replenished with hydraulic oil flowing from the tank T2 to the head side oil chamber 1b through the prefill valve 15 which is in the first predefined position (see arrow AR9) .

Thus, the prefill valve 15 can absorb a difference between an amount of hydraulic oil flowing into the head side oil chamber 1b and an amount of hydraulic oil flowing out from the rod side oil chamber 1c. The amount of hydraulic oil flowing into the head side oil chamber 1b is less than the amount of hydraulic oil flowing out from the rod side oil chamber 1c.

If a distance between the dual directional hydraulic pump 10 and the head side oil chamber 1b is small and thus pressure loss in between is small, hydraulic oil discharged from the dual directional hydraulic pump 10 flows to the head side oil chamber 1b without flowing to the tank T1 through the flushing valve 11.

Even in this case, an amount of hydraulic oil discharged from the dual directional hydraulic pump 10 is not sufficient to completely fill up a volume of the head side oil chamber 1b which increases with a descent of the rod 4, because the cross sectional area of the head side oil chamber 1b is larger than the cross sectional area of the rod side oil chamber 1c. Thus, as in the case where hydraulic oil discharged from the dual directional hydraulic pump 10 flows to the tank T1 through the flushing valve 11, hydraulic oil flows from the tank T2 to the head side oil chamber 1b through the prefill valve 15 which is in the first predefined position, and replenishes the head side oil chamber 1b (see arrow AR9).

In this way, the control device 14 causes the dual directional hydraulic pump 10 to rotate for restricting a descent velocity of the driven part W, and to suck out hydraulic oil in the rod side oil chamber 1c. Thus, the control device 14 can adequately control the descent velocity of the driven part W while absorbing the driven part's own weight pressure.

Next, referring to FIG. 4, an operation of the hydraulic actuator 100 in the case of lifting the driven part W will be described.

Once a target position (height) of the driven part W is entered by an operator through the input device (not shown), the control device 14 detects a current position (height) of the driven part W based on an output of the position sensor 5. Then, the control device 14 calculates the difference (cm) between the current position (height) and the target position (height), and decides a target ascent velocity (cm/second) according to the difference.

Then, the control device 14 calculates a target flow rate *Q* (cm³/second) by multiplying the decided target ascent velocity V (cm/second) of the driven part W by the cross sectional area *A* (cm²) of the rod side oil chamber 1c. Then the control device 14 calculates a target rotational speed *N* (rps) by dividing the target flow rate *Q* (cm3/second)) by the discharge rate per revolution *q* (cm³/revolution) of the dual directional hydraulic pump 10. Then the control device 14 outputs a control signal (a motor rotation command value) corresponding to the calculated target rotational speed *N* (rps) to the electric motor 2.

The electric motor 2 rotates at a speed corresponding to the motor rotation command value, and drives the dual directional hydraulic pump 10 so that the pump 10 can suck out hydraulic oil from the head side oil chamber 1b (see arrows AR10 and AR11), and the pump 10 can discharge the sucked out hydraulic oil toward the rod side oil chamber 1c (see arrows AR12 and AR13).

In this case, pressure in the rod side oil chamber 1c (pressure in the oil passage connecting the discharge port of the pump 10 and the rod side oil chamber 1c) is higher than a predetermined value due to the driven part's own weight pressure. Thus, as in the case of lowering the driven part W, the flushing valve 11 is moved to the left side of the figure (see arrow AR14), and fluidly connects the tank T1 and the oil passage connecting the suction port of the pump 10 and the head side oil chamber 1b.

Thus, a portion of hydraulic oil flowing out from the head side oil chamber 1b flows to the tank T1 through the flushing valve 11 without flowing to the rod side oil chamber 1c through the dual directional hydraulic pump 10 (see arrows AR15 to AR18).

This is to absorb a difference between an amount of hydraulic oil flowing out from the head side oil chamber 1b and an amount of hydraulic oil flowing into the rod side oil chamber 1c. The amount of hydraulic oil flowing out from the head side oil chamber 1b is larger than the amount of hydraulic oil flowing into the rod side oil chamber 1c.

A portion of hydraulic oil flowing out from the head side oil chamber 1b whose volume decreases with an ascent of the rod 4 flows into the tank T2 through the prefill valve 15 which is in the second predefined position (see arrow AR19).

This is to absorb, as in the case where a portion of hydraulic oil flowing out from the head side oil chamber 1b flows to the tank T1 through the flushing valve 11, a difference between the amount of hydraulic oil flowing out from the head side oil chamber 1b and the amount of hydraulic oil flowing into the rod side oil chamber 1c. The amount of hydraulic oil flowing out from the head side oil chamber 1b is larger than the amount of hydraulic oil flowing into the rod side oil chamber 1c.

In this way, the control device 14 can adequately control the ascent velocity of the driven part W while absorbing the difference between the amount of hydraulic oil flowing out from the head side oil chamber 1b and the amount of hydraulic oil flowing into the rod side oil chamber 1c.

With the above described configuration, the hydraulic actuator 100 can omit the counter balance valve such as the one mounted on the conventional fluid pressure actuator 50. By the omission of the counter balance valve, the hydraulic actuator 100 can skip a pressurization of the head side oil chamber 1b required for exceeding a relief pressure of the counter balance valve, and can move the driven part W up and down more efficiently without causing unnecessary pressure loss.

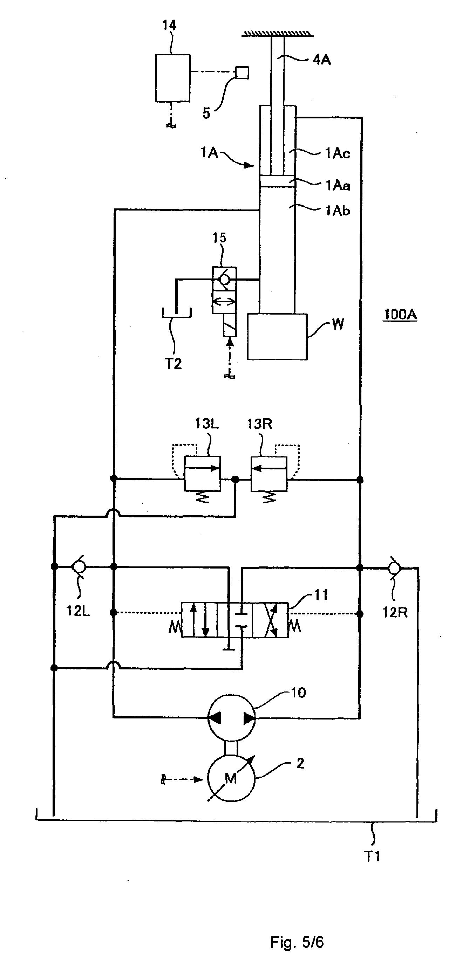

Next, referring to FIG. 5, a hydraulic actuator 100A according to another embodiment of the present invention will be described.

The hydraulic actuator 100A is different from the hydraulic actuator 100 in respect of an arrangement of a hydraulic cylinder 1A, a rod 4A, and a driven part W. However, other respects are common to the hydraulic actuator 100 and the hydraulic actuator 100A. Thus, the difference will be described in detail while leaving out the explanation of the common points.

The hydraulic cylinder 1A has a head side oil chamber 1Ab and a rod side oil chamber 1Ac isolated by a piston 1Aa and a cylinder inner wall. The head side oil chamber 1Ab is fluidly connected to one port of a dual directional hydraulic pump 10. The rod side oil chamber 1Ac is fluidly connected to the other port of the dual directional hydraulic pump 10.

The rod 4A is an immovable member whose upper end is fixed to an external immovable member. The rod 4A is different from the rod 4 as a movable member in the hydraulic actuator 100.

In contrast, the hydraulic cylinder 1A is configured to be a movable member which can move up and down relative to the rod 4A as an immovable member. The hydraulic cylinder 1A is different from the hydraulic cylinder 1 as an immovable member in the hydraulic actuator 100.

The driven part W is fixed to a lower end of the hydraulic cylinder 1A as a movable member which can move up and down. The driven part W can move up and down together with the hydraulic cylinder 1A which moves up and down relative to the rod 4A.

Even such a configuration where the rod side oil chamber 1Ac is located above the head side oil chamber 1Ab, the fact remains that the rod side oil chamber 1Ac receives the driven part's own weight pressure. As in the case of the hydraulic actuator 100, in the case of moving the driven part W downward, a control device 14 calculates a target flow rate *Q* (cm³/second) by multiplying a target descent velocity (cm/second) of the driven part W by a cross sectional area *A* (cm²) of the rod side oil chamber 1Ac. Then the control device 14 calculates a target rotational speed *N* (rps) by dividing the target flow rate Q (cm³/second) by a discharge rate per revolution *q* (cm³/revolution) of the dual directional hydraulic pump 10. Then, the control device 14 outputs a control signal (a motor rotation command value) corresponding to the calculated target rotational speed *N* (rps) to the electric motor 2. The same goes for moving the driven part W upward.

With the above described configuration, as in the case of the hydraulic actuator 100, the hydraulic actuator 100A can move the driven part W up and down more efficiently without causing unnecessary pressure loss.

The hydraulic actuators 100, 100A receive the driven part's own weight pressure through use of oil in the rod side oil chamber 1c, 1Ac. However, the present invention is not limited to this configuration. The hydraulic actuators 100, 100A may be configured to receive the driven part's own weight pressure through use of oil in the head side oil chamber 1b, 1Ab.

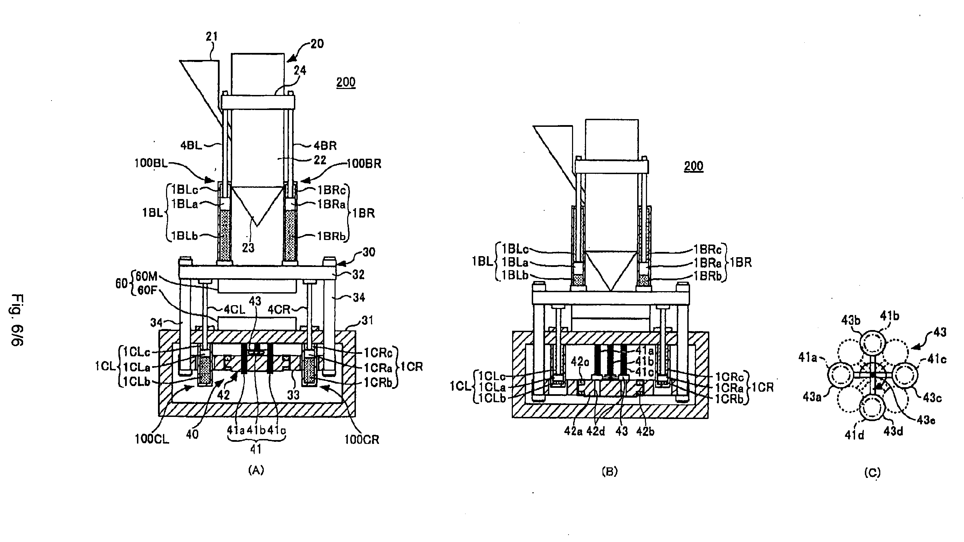

Now, referring to FIG. 6, the case where the hydraulic actuator according to an embodiment of the present invention is applied to an injection molding machine will be described. FIG. 6 is a diagram illustrating a configuration example of an injection molding machine 200 having the hydraulic actuator according to an embodiment of the present invention.

The injection molding machine 200 mainly includes an injection device 20 and a mold clamp device 30. FIG. 6A illustrates a side view of the injection molding machine 200 in which the injection device 20 is lifted and the mold clamp device 30 is in a mold opening state. FIG. 6B illustrates a side view of the injection molding machine 200 in which the injection device 20 is lowered and the mold clamp device 30 is in a mold clamping state. FIG. 6C is a top view of a shutter to be hereinafter described. Diagonal hatching portions in FIG. 6A and 6B represents partial cross section.

The injection device 20 melts and plasticizes resin fed through a hopper 21 as a resin feed device in an injection cylinder 22. Specifically, the injection device 20 rotates a screw (not shown) in the injection cylinder 22 by a metering motor (not shown), and feeds melted resin to a nozzle part 23 at the tip of the injection cylinder 22.

In this embodiment, each of two hydraulic actuators 100BL, 100BR, acting as a hydraulic actuator according to the present invention, holds and moves up and down the injection device 20 as a driven part W above the mold clamp device 30.

A hydraulic cylinder 1BL of the hydraulic actuator 100BL has a head side oil chamber 1BLb and a rod side oil chamber 1BLc isolated by a piston 1BLa and a cylinder inner wall. A hydraulic cylinder 1BR of the hydraulic actuator 100BR has a head side oil chamber 1BRb and a rod side oil chamber 1BRc isolated by a piston 1BRa and a cylinder inner wall.

The injection device 20 is fixed by mounding hardware 24 to rods 4BL, 4BR extending vertically upward from each of the piston 1BLa and the piston 1BRa. The hydraulic cylinders 1BL, 1BR are fixed to an upper surface of a movable platen 32.

In FIG. 6, for clarity, diagrammatic representations of components of the hydraulic actuators 100BL, 100BR, such as electric motors, dual directional hydraulic pumps, position sensors, flushing valves, check valves, relief valves, and control devices, are omitted. However, in practice, the electric motors, the dual directional hydraulic pumps, the position sensors, the flushing valves, the check valves, the relief valves, and the control devices are connected to the hydraulic cylinders 1BL, 1BR as in the arrangements illustrated in FIG. 2 or 5. The hydraulic actuators 100BL, 100BR do not require a prefill valve and oil passages connecting a tank and each of the head side oil chambers 1BLb, 1BRb. This is because oil in the respective head side oil chambers 1BLb, 1BRb, whose cross sectional areas are larger than those of the respective rod side oil chambers 1BLc, 1BRc, receives the injection device's own weight pressure. Namely, because pressure in the respective head side oil chambers 1BLb, 1BRb do not fall below pressure in the tank in the case of moving the injection device 20 up and down.

The injection device 20 injects the melted resin fed into the nozzle part 23 into a cavity space (not shown) within a mold device 60. Specifically, the injection device 20 moves the screw axially toward the nozzle part 23 by an injection motor (not shown), and injects the melted resin in the nozzle part 23 into the cavity space. The mold device 60 includes a fix mold 60F attached to a fixed platen 31 and a movable mold 60M attached to the movable platen 32. The cavity space is formed with in the mold device 60 by bringing the movable mold 60M into contact with the fixed mold 60F.

The mold clamp device 30 executes a mold opening operation, a mold closing operation, and a mold clamping operation. Specifically, the mold clamp device 30 moves the movable platen 32 closer to the fixed platen 31, and brings the movable mold 60M into contact with the fixed mold 60F. Alternatively, the mold clamp device 30 moves the movable platen 32 away from the fixed platen 31, and separates the movable mold 60M from the fixed mold 60F.

In this embodiment, each of two hydraulic actuators 100CL, 100CR, acting as a hydraulic actuator according to the present invention, holds and moves up and down the movable platen 32 as a driven part W above the fixed platen 31.

A hydraulic cylinder 1CL of the hydraulic actuator 100CL has a head side oil chamber 1CLb and a rod side oil chamber 1CLc isolated by a piston 1CLa and a cylinder inner wall. A hydraulic cylinder 1CR of the hydraulic actuator 100CR has a head side oil chamber 1CRb and a rod side oil chamber 1CRc isolated by a piston 1CRa and a cylinder inner wall.

The movable platen 31 is fixed to rods 4CL, 4CR extending vertically upward from each of the piston 1CLa and the piston 1CRa. The hydraulic cylinders 1CL, 1CR are fixed to an end plate 33.

In FIG. 6, for clarity, diagrammatic representations of components of the hydraulic actuators 100CL, 100CR, such as electric motors, dual directional hydraulic pumps, position sensors, flushing valves, check valves, relief valves, and control devices, are omitted. However, in practice, the electric motors, the dual directional hydraulic pumps, the position sensors, the flushing valves, the check valves, the relief valves, and the control devices are connected to the hydraulic cylinders 1CL, 1CR as in the arrangements illustrated in FIG. 2 or 5. The hydraulic actuators 100CL, 100CR do not require a prefill valve and oil passages connecting a tank and each of the head side oil chambers 1CLb, 1CRb. This is because oil in the respective head side oil chambers 1CLb, 1BRb, whose cross sectional areas are larger than those of the respective rod side oil chambers 1CLc, 1CRc, receives the movable platen's own weight pressure. Namely, because pressure in the respective head side oil chambers 1CLb, 1CRb do not fall below pressure in the tank in the case of moving the movable platen 32 up and down.

The mold clamp device 30 generates a mold clamping force by a mold clamping mechanism 40 while bringing the movable mold 60M into contact with the fixed mold 60F, and further clamps the movable mold 60M on the fixed mold 60F.

The mold clamping mechanism 40 mainly includes center rods 41, a hydraulic actuator 42, and a shutter 43.

The center rods 41 protrude downward from the fixed platen 31. In this embodiment, four center rods 41 are located at a 90 degrees angular interval on a circumference of a circle whose center is located on the point on the bottom surface of the fixed platen 31 corresponding to a center part of the mold device 60.

The hydraulic actuator 42 is mounted on the end plate 33 fixed to the movable platen 32 through tie bars 34. The hydraulic actuator 42 is a hydraulic mechanism for generating the mold clamping force. As shown in FIG. 6B, the hydraulic actuator 42 has a lower side oil chamber 42b and an upper side oil chamber 42c isolated by a piston 42a and a cylinder inner wall. The hydraulic actuator 42 is the known mechanism for generating a force by employing the Pascal's principle. Thus, in FIG. 6, diagrammatic representations of other components of the hydraulic actuator 42 are omitted for clarity.

The shutter 43 transmits a mold clamping force generated by the hydraulic actuator 42 to the center rods 41. Specifically, the shutter 43 has a spacer part for selectively filling a space between an upper surface of the piston 42a and each of bottom surfaces of lower end parts of four center rods 41. FIG. 6C is a top view of the shutter 43. In this embodiment, the shutter 43 has four spacer parts 43a-43d each of which contacts each of bottom surfaces of lower end parts of four center rods 41a-41d. Four circles represented by a dashed-dotted line in FIG. 6C indicates each of the bottom surfaces of lower end parts of four center rods 41a-41d which contacts each of the four spacer parts 43a-43d.

For example, the shutter 43 is supported on the upper surface of the piston 42a so that the shutter 43 can rotate about a rotational center 43e, and is rotationally driven by a drive part (not shown). Additionally, in the mold opening state shown in FIG. 6A, the shutter 43 is rotated to the position indicated by a dashed line in FIG. 6C so that each of the spacer parts 43a-43d does not contact each of the lower end parts of the center rods 41a-41d. In this case, each of the center rods 41a-41d passes through each of four through holes formed in the piston 42a so that the lower part reaches the lower side of the piston 42. In contrast, in the mold clamping state shown in FIG. 6B, the shutter 43 is rotated to the position indicated by a solid line in FIG. 6C so that each of the spacer parts 43a-43d contacts each of the lower end parts of the center rods 41a-41d. In this case, once the mold clamping mechanism is activated, each of the center rods 41a-41d restrains the piston 42a from moving upward through use of the shutter 43. As a result, the mold clamping mechanism generates a force for pressing the end plate 33 down, i.e., a force for pulling the movable platen 32 down (a mold clamping force).

In the mold clamping state shown in FIG. 6B, the injection device 20 injects the melted resin fed to the nozzle part 23 into the cavity space within the mold device 60.

Then, after a predetermined time has elapsed and the melted resin in the cavity space has cooled down and become solidified, the mold clamp device 30 moves the movable platen 32 away from the fixed platen 31 through use of the two hydraulic actuators 100CL, 100CR, and separates the movable mold 60M from the fixed mold 60F.

With the above described configuration, the hydraulic actuators 100BL, 100BR mounted on the injection molding machine 200 can move the injection device 20 up and down more efficiently without causing unnecessary pressure loss.

Also, the hydraulic actuators 100CL, 100CR mounted on the injection molding machine 200 can move the movable platen 32 up and down more efficiently without causing unnecessary pressure loss.

In the above described embodiment, the hydraulic actuators 100BL, 100BR, 100CL, 100CR receive a self weight pressure of the injection device 20 or the movable platen 23 through use of oil in the head side oil chambers 1BLb, 1BRb, 1CLb, 1CRb. However, the present invention is not limited to this configuration. The hydraulic actuators 100BL, 100BR, 100CL, 100CR may be configured to receive the self weight pressure of the injection device 20 or the movable platen 23 through use of oil in the rod side oil chamber 1BLc, 1BRc, 1CLc, 1CRc.

Although details of the preferred embodiments have been described, the present invention is not intended to be limited to the above described embodiments. It is possible to apply a variety of modifications or substitutions to the above described embodiments without departing from the scope of the present invention.

For example, in the above described embodiments, the hydraulic cylinders 1, 1A are configured so that the rods 4, 4A extend vertically, and move the driven part W up and down vertically. However, the hydraulic cylinders 1, 1A may be configured so that the rods 4, 4A extend diagonally, and achieve linear motion of the driven part W in a diagonal direction.

## Claims

1. An injection molding machine, comprising:
a hydraulic actuator configured to move a driven part up and down,
a single-rod cylinder including a rod side oil chamber and a head side oil chamber isolated by a piston, and configured to receive at least part of a self weight pressure of the driven part through use of oil in the rod side oil chamber or the head side oil chamber,
a dual directional hydraulic pump, one port of which is fluidly connected to the rod side oil chamber, the other port of which is fluidly connected to the head side oil chamber, and
a motor configured to drive the dual directional hydraulic pump,
wherein the motor drives the dual directional hydraulic pump against a pressure of the oil in the rod side oil chamber or the head side oil chamber which receives at least part of the self weight pressure of the driven part.

2. The injection molding machine as claimed in claim 1,
wherein the motor controls flow rate of the oil flowing out from the rod side oil chamber or the head side oil chamber by driving the dual directional hydraulic pump.

3. The injection molding machine as claimed in claim 1 or 2, further comprising:
a prefill valve or a pilot check valve for replenishing the head side oil chamber with oil.

4. A hydraulic actuator for moving a driven part up and down, comprising:
a single-rod cylinder including a rod side oil chamber and a head side oil chamber isolated by a piston, and configured to receive at least part of a self weight pressure of the driven part through use of oil in the rod side oil chamber or the head side oil chamber,
a dual directional hydraulic pump, one port of which is fluidly connected to the rod side oil chamber, the other port of which is fluidly connected to the head side oil chamber, and
a motor configured to drive the dual directional hydraulic pump,
wherein the motor drives the dual directional hydraulic pump against a pressure of the oil in the rod side oil chamber or the head side oil chamber which receives at least part of the self weight pressure of the driven part.
